(19) Europäisches Patentamt

European Patent Office

Office européen des brevets

(11) **EP 1 581 937 B1**

(12) **EUROPEAN PATENT SPECIFICATION**

(45) Date of publication and mention
of the grant of the patent:
**20.09.2006 Bulletin 2006/38**

(51) Int Cl.:
**G11B 7/095** (2006.01)   **G11B 7/135** (2006.01)

(21) Application number: **03778680.3**

(22) Date of filing: **22.12.2003**

(86) International application number:
**PCT/IB2003/006213**

(87) International publication number:
**WO 2004/059626 (15.07.2004 Gazette 2004/29)**

(54) **DISC DRIVE FOR AN OPTICAL SCANNING DEVICE**

PLATTENLAUFWERK FÜR EIN OPTISCHES ABTASTGERÄT

UNITE DE DISQUE POUR DISPOSITIF DE LECTURE OPTIQUE

(84) Designated Contracting States:
**AT BE BG CH CY CZ DE DK EE ES FI FR GB GR
HU IE IT LI LU MC NL PT RO SE SI SK TR**

(30) Priority: **30.12.2002 EP 02293262**

(43) Date of publication of application:
**05.10.2005 Bulletin 2005/40**

(73) Proprietor: **Koninklijke Philips Electronics N.V.
5621 BA Eindhoven (NL)**

(72) Inventors:
• **ANDERSEN, Ole Klembt,
c/o Société civile SPID
75008 Paris (FR)**

• **HENDRIKS, Bernardus H.W.,
c/o Société civile SPID
75008 Paris (FR)**

(74) Representative: **Landousy, Christian
Société Civile SPID,
156, Boulevard Haussmann
75008 Paris (FR)**

(56) References cited:
**EP-A- 0 357 323          WO-A-02/21522
US-A- 5 636 190**

• **PATENT ABSTRACTS OF JAPAN vol. 2000, no.
06, 22 September 2000 (2000-09-22) -& JP 2000
076679 A (RICOH CO LTD), 14 March 2000
(2000-03-14) cited in the application**

## Description

### FIELD OF THE INVENTION

The present invention generally relates to optical scanning devices for storing information onto a disc-shaped storage medium or reading information from such disc-shaped storage medium, where the disc is rotated and a write/ read head is moved radially with respect to the rotating disc. More particularly, the invention relates to an optical disc drive comprising rotating means, defining a rotating axis for an optical disc, and optical scanning means, for scanning said optical disc with a light beam.

The present invention is applicable in the case of optical or magneto-optical disc systems. Hereinafter, the wording "optical disc system" will be used, but it is to be understood that this wording is intended to also cover magneto-optical disc systems.

### BACKGROUND OF THE INVENTION

It is commonly known that an optical storage disc comprises at least one track of storage space where information (such as images, data, music,...) may be stored. Optical storage discs may be of a read-only type, where information is recorded during manufacture and can only be read by a user, or of a writable type, where information may be stored by a user. For writing information in the storage space of the optical storage disc or for reading information from the disc, an optical disc drive comprises, on the one hand, rotating means for receiving and rotating the optical disc and, on the other hand, optical means for generating an optical beam, typically a laser beam, and scanning the storage track with said laser beam. The rotating means are for example a motor, which drives a hub engaging a central portion of the optical disc. For optically scanning the rotating disc, the optical disc drive comprises for instance at least a light beam generator device (typically a laser diode), an objective lens, for focusing the light beam in a focal spot on the information layer of the disc, and an optical detector, for receiving the reflected light reflected from the disc and generating an electrical detector output signal. Since the technology of optical discs in general, the way in which information can be stored in an optical disc and the way in which optical data can be read from an optical disc are commonly known, it is not necessary here to describe this technology in more detail.

In an ideal case, the information layer of the disc is assumed to be perpendicular to the optical axis of the apparatus, so that the returning beam, i.e. the light reflected from the disc, is co-axial and counter propagates to the incoming light. In the case where the disc has a warped surface, the propagation axis of the reflected light is no longer co-axial to the axis of the incoming light, and a tilt effect, consisting in a deviation of the returning beam from the co-axial propagation of the ideal case, is observed. Such a disc-tilt is known to degrade the performance of optical disc-drives and has to be detected and compensated. Nevertheless, since the incoming light is focused to a tiny spot on the information layer of the disc, this deviation from co-axial propagation is very small and a tilt detector based on this principle of detection of said deviation is very difficult to implement.

It has then been proposed to amplify the deviation of the returning beam, for instance by adding aberrations to the incoming beam and therefore causing the spot size on the information layer to increase. For instance, when the disc is accessed with infra-red light (wavelength = about 790 nm), the larger amount of spherical aberration (said aberration being due to the fact that, in a radiation beam, the rays in the central part of the beam and the rays of the periphery of the beam have different focal points when they are focused on the disc) causes the spot size on the information layer of the disc to increase compared to the situation where the disc is accessed with red light (wavelength = about 660 nm). An example of such a situation is described in the Japanese patent JP2000076679 reflecting the preamble of the independent claim 1, where disc-tilt is measured from the position of a spot with a light source having a wavelength different from the wavelength used for reading out the information on the disc. It turns out, however, that, when such a method is applied, the size of the spot on the optical detector is now too large compared to the size of the standard four-quadrant detector conventionally used in optical disc drive apparatuses : no significant difference in the signals from the quadrants of the detector can be measured, and hence no tilt error signal can be derived.

### SUMMARY OF THE INVENTION

It is therefore the object of the invention to provide an optical disc drive avoiding this drawback.

To this end, the invention relates to an optical disc drive as defined in the introductory paragraph of the description and in which the optical scanning means themselves comprise at least :

- a first light source, for producing said first light beam ;
- focusing means, applied to said light beam and provided between said first light source and a focusing point on an information layer on said first disc having a first cover layer ;

- an optical detector provided for receiving a first backward beam reflected from said information layer of said first disc ;
- a second light source for producing a second light beam also transmitted to said focusing means and for measuring tilt from the position, on said optical detector, of a second spot corresponding to a second backward beam obtained after reflection of said second light beam on said information layer of said first disc;

said optical disc drive further comprising, between said focusing point and said optical detector, a diffractive structure provided with diffracting elements for substantially refocusing the returning second beam onto the detector.

This structure allows to generate on the detector a spot small enough in order to be able to measure significant differences between the signals of the detector and therefore to derive a noticeable tilt error signal.

Preferably, the diffractive structure is attached to one surface of a servo-lens positioned just before the optical detector. However, it may also be attached to one surface of an objective lens used as focusing means, or to a separate plate.

In an advantageous implementation, the diffractive structure consists of a series of ring-shaped prisms, but it can also be approximated by a step-wise structure.

BRIEF DESCRIPTION OF THE DRAWINGS

The invention will now be described, by way of example only, in a more detailed manner and with reference to the accompanying drawings, in which :

- Fig.1 illustrates an example of optical disc drive suitable for storing information on or reading information from an optical disc ;
- Fig.2 shows an example of optical scanning device;
- Figs 3 and 4 show two views (from the top and in cross section, respectively) of a first implementation of the diffracting structure according to the invention ;
- Fig.5 shows a phase-step structure that is an approximation of the prism structure illustrated in the cross section of Fig.4 ;
- Figs 6 and 7 illustrate the size and localization of the spot, respectively without and with the diffractive structure according to the invention ;
- Fig.8 is a graph showing a simulated normalized radial-tilt error-signal obtained in the case of the implementation of Figs 3 and 4 ;
- Fig.9 is a graph showing a similar normalized radial-tilt error-signal obtained in the case of the implementation of Fig.5 ;
- Fig.10 shows how the light passes through the objective lens and is focussed on the information layer, and Fig.11 is a magnified view of the region around said information layer.

DETAILED DESCRIPTION OF THE INVENTION

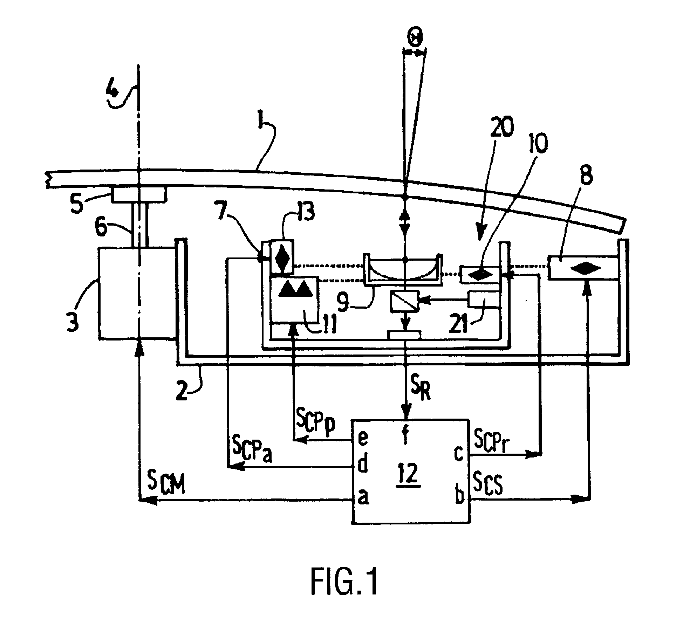

An example of an optical disc drive, suitable for storing information on or reading information from an optical disc 1, is schematically illustrated in Fig.1. The disc drive comprises an apparatus frame 2 and, for rotating the disc 1, a motor 3 fixed to the frame 2 and defining a rotation axis 4. For receiving and holding the disc 1, the disc drive may comprise a turntable or clamping hub 5, which is mounted on the axle 6 of the motor 3. The disc drive also comprises a sledge 7, which is displaceably guided in the radial direction of the disc 1, i.e. in a direction substantially perpendicular to the rotation axis 4, by guiding means not shown for the sake of clarity. A radial sledge actuator 8 is provided for regulating the radial position of the sledge 7 with respect to the apparatus frame 2.

The disc drive further comprises a platform 9, which is displaceable in the radial direction of the disc 1 with respect to the sledge 7, and which is displaceably mounted with respect to the sledge 7 by mounting means not shown for the sake of clarity. A radial platform actuator 10 is provided for radially displacing the platform 9 with respect to the sledge 7. Radial sledge actuators and radial platform actuators are known per se, and as the design and operation of such radial platform actuator are not the subject of the present invention, it is not necessary here to discuss them in great detail.

The disc drive further comprises, for scanning the tracks (not shown) of the disc 1 by means of an optical beam, an optical device 20 which is described later. It also comprises a pivot platform actuator 11, arranged for pivoting the platform 9 with respect to the sledge 7 (such pivot platform actuators are known per se and therefore not discussed in great detail), and a control unit 12 having the following outputs : a first output 12a connected to a control input of the motor 3, a second output 12b coupled to a control input of the radial sledge actuator 8, a third output 12c coupled to a control input of the radial platform actuator 10, a fourth output 12d coupled to a control input of an axial platform actuator 13, and a fifth output 12e coupled to a control input of the pivot platform actuator 11. The control unit 12 is designed to generate at said outputs 12a to 12e control signals $S_{CM}$, $S_{CS}$, $S_{Cpr}$, $S_{Cpa}$ and $S_{CPp}$ respectively for controlling the motor 3, the sledge actuator 8, the radial platform actuator 10, the axial platform actuator 13 and the pivot platform actuator 11. The control unit 12 has also a read signal input 12f for receiving a read signal $S_R$ from an optical detector described in the following paragraphs.

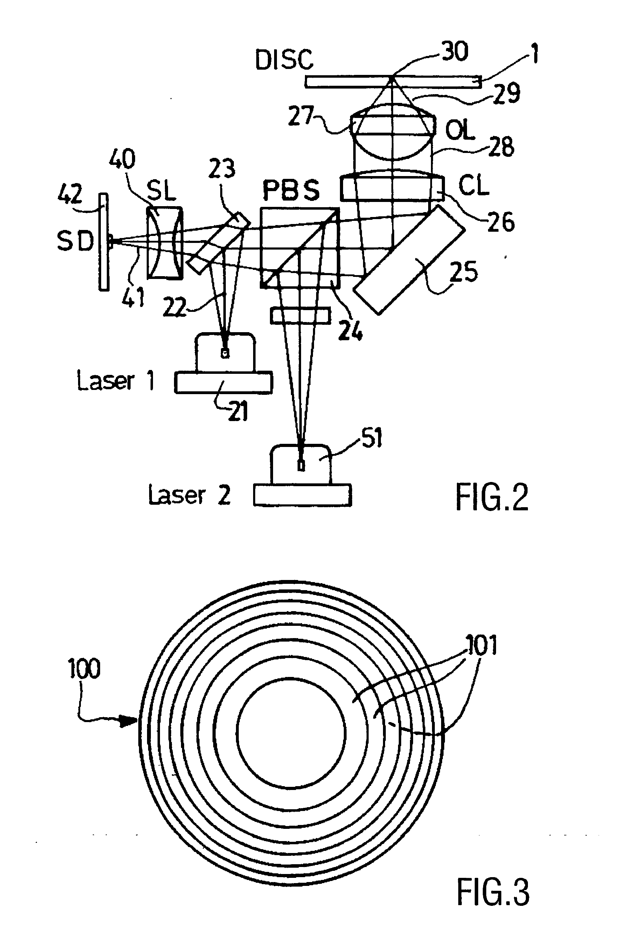

The optical scanning device 20 will now be described. According to a preferred embodiment of the invention illustrated in Fig.2, the optical scanning device comprises light beam generation means 21 (first light beam), typically a laser, which may be mounted with respect to the frame 2 or the sledge 7. This laser 21 produces a diverging radiation beam 22 of a given first wavelength (in this example 660 nm), and the linearly polarized light flux thus emitted is reflected by a semi transparent mirror 23 and transmitted through a polarized beam-splitter 24 towards a mirror 25 and a lens system. This lens system includes a collimator lens 26, that changes the diverging radiation beam 22 to a collimated radiation beam 28, and an objective lens 27, that transforms said collimated beam into a converging beam 29 which comes to a focus 30 on the information layer of the disc.

After its reflection on said information layer, the converging beam 29 forms a reflected beam which returns on the same optical path. This backward radiation is further transmitted through the polarized beam-splitter 24 and passes through a servo-lens 40 which transforms said returning beam into a converging beam 41 falling on an optical detector such as a servo-detector 42. The semi-transparent mirror 23 is constructed with optical elements that allow to separate the emitted beam and the returning one and to supply the latter to the optical elements (40,42) that follow said mirror.

In order to obtain a measure of the amount of radial and tangential tilt of the disc 1, a second light source 51, typically a laser with a second wavelength different from said first wavelength (in this example 780 nm), is temporarily switched on for producing a second light beam. By definition, the two wavelengths are considered as different when the absolute difference between them is more than 10 nm. The polarized light emitted by said light source 51 is reflected by the polarized beam-splitter 24 and the mirror 25, and then passed through the collimator lens 26 and focused by the objective lens 27. A second backward beam obtained after reflection of said second beam on the information layer is then received by the servo-detector 42. Since the wavelength of the second light beam is different from that of said first light beam, the spot on the information layer of said first disc is now aberrated. As a result the size of the spot on the detector of this second beam becomes larger than the size of the detector.

According to the invention, it is proposed, in order to overcome the problem of the size of the spot on the servo-detector, to attach to one surface of one of the lenses located on the path of the backward beam or on a separate plate, between the focusing point on the information layer and the servo-detector, a diffractive structure implemented as described hereinunder. By doing so, the size of the spot on the servo-detector is reduced when accessing said first disc with the light emitted by the second light source.

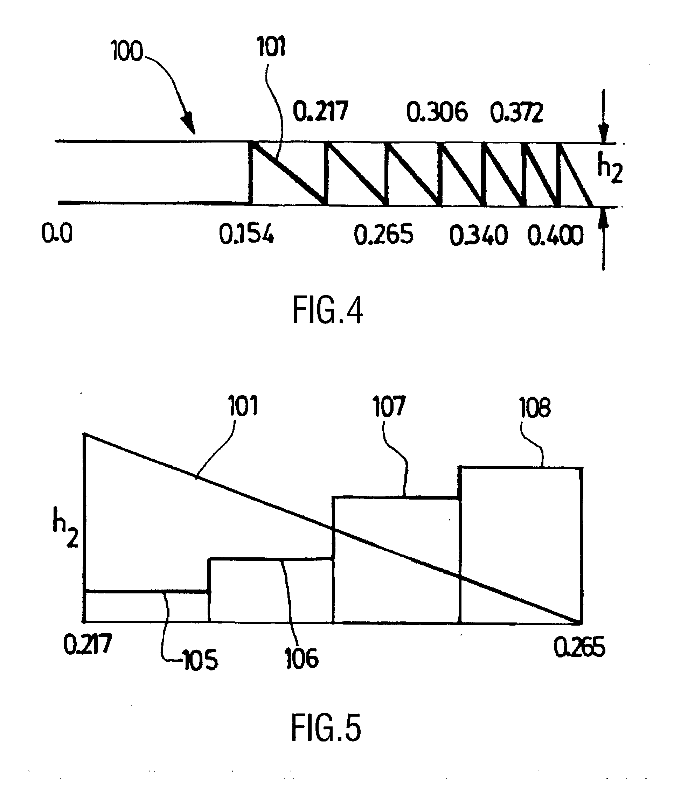

An example of this diffractive structure is shown in Figs 3 and 4. For the second light beam produced by radiation source 51, the diffractive structure should diffract the light beam substantially in one particular diffraction order. In this example, the case where the light is diffracted into the first diffraction order is considered. This can be achieved by a diffractive structure 100 which is of a blazed grating type and consists of a series of ring-shaped prisms 101, as seen from the top (in Fig.3) and in cross-section along the radius (in Fig.4). In the cross-section of Fig.4, the numbers indicate the radial position of each of the diffracting elements, in millimetres. The height $h_2$ of the prisms is given by :

$$h_2 = \lambda_2 \, / \, (n_2\text{-}1) \qquad\qquad (1)$$

where $\lambda_2$ is the wavelength of the light emitted by the second light source 51 and $n_2$ is the refractive index of the prism material at the wavelength $\lambda_2$. As shown in Figs 3 and 4, the central region of the diffractive structure (until a radius of 0.154 mm) does not contain any diffracting element. The size of this region is chosen so that when accessing a second disc having a second cover layer with light from the second light source 51, the reflected light passes the structure 100 unaltered, while, when accessing said first disc having said first cover layer with light from said second light source, a substantial amount of the rays of the divergent returning beam that fall outside the detector 42 are re-focused onto said detector. The following table 1 gives typical values for the radius (in millimetres) of the successive rings constituting the diffracting structure, together with the pitch, i.e. the distance between two successive rings, in micrometres :

Table 1

| Ring number | Radius (mm) | Pitch ($\mu$m) |
|---|---|---|
| 1 | 0.154 | 0.0 |
| 2 | 0.217 | 63.2 |
| 3 | 0.265 | 48.0 |

(continued)

| Ring number | Radius (mm) | Pitch ($\mu$m) |
|---|---|---|
| 4 | 0.306 | 40.1 |
| 5 | 0.340 | 35.0 |
| 6 | 0.372 | 31.3 |
| 7 | 0.400 | 28.6 |
| 8 | 0.427 | 26.4 |
| 9 | 0.451 | 23.0 |
| 10 | 0.474 | 21.7 |
| 11 | 0.496 | 20.6 |
| 12 | 0.517 | 19.6 |

An important feature of the diffractive structure is that it should not influence the returning light of said first light beam when this light is used to access said first disc. A blazed grating however also diffracts the first light beam significantly into the first diffraction order. In order to prevent this, instead of a blazed grating a binary grating must be used. In a binary grating, each blaze is approximated by a step-wise structure (see Fig. 5). The international patent application WO02/21522 describes how to design such binary gratings diffracting a substantial part of the second light beam to the first diffraction order while not influencing the first light beam. This result may be obtained with the proposed step-wise structure of Fig.5 where the blazed grating is approximated with four steps (105, 106, 107 and 108). It can be shown that with this structure, the light emitted by the first light source is unaltered by the grating, because the step heights have been chosen as multiples of $h_1$, each $h_1$ step leading to a phase shift of $2\pi$ when using light from the first light source (the phase shift for light emitted by the second light source is generally not $2\pi$). The step height $h_1$ is given by :

$$h_1 = \lambda_1 \ / \ (n_1 - 1) \qquad\qquad (2)$$

where $\lambda_1$ is the wavelength of the light emitted by the first light source and $n_1$ is the refractive index of the grating material at the wavelength $\lambda_1$. Here, for exemplary purposes, the refractive index of the grating material for both $\lambda_1$ and $\lambda_2$ is assumed to be 1.65. For the situation shown in Fig. 5, the height of step 105 is $1 \times h_1$, the height of step 106 is $2 \times h1$, the height of step 107 is $4 \times h1$ and the height of step 108 is $5 \times h1$. The diffraction efficiency of the shown step structure is approximately 75 per cent.

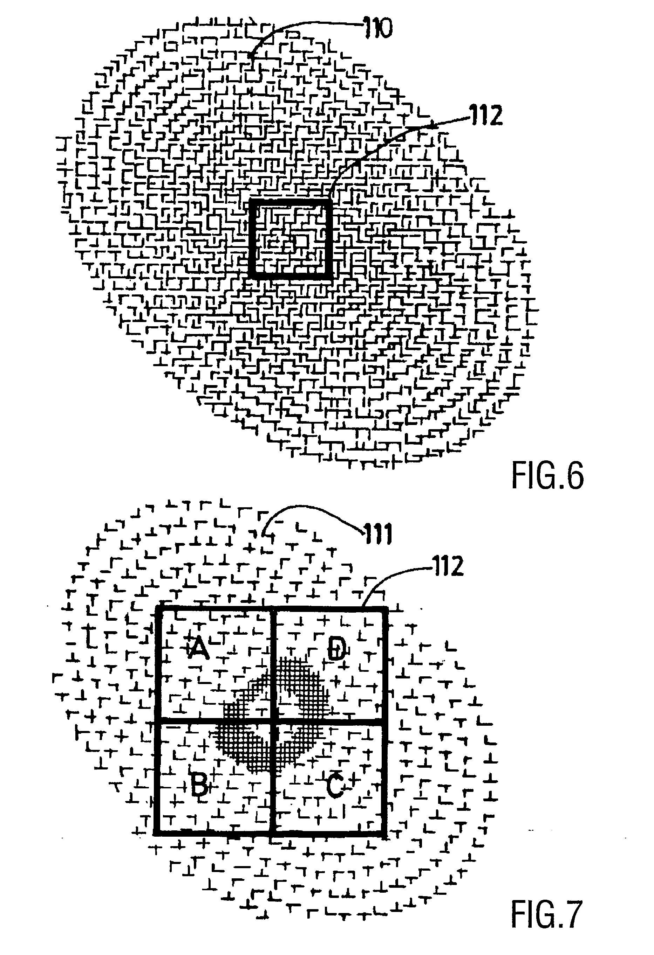

The diffractive structure used, according to the invention, to reduce the size of the spot from the second light source on the servo-detector is either attached to the servo-lens or to the objective lens or on a separate plate. In the first case, the diffractive structure (such as illustrated in Fig.5) is attached to the front surface of the servo-lens, and Figs 6 and 7 show respectively the spot 110 without the diffractive structure and the spot 111 with the diffractive structure attached to the servo-lens. As can be seen from Fig.7 compared to Fig.6, the spot size is reduced as compared to the situation without the diffractive structure (in these figures, the black squares 112 indicate the size of the standard four-quadrant detector used in optical pick-up devices). At least more than 10% of the light of said second beam falling outside the detector when the grating according to the invention is not present is not refocused onto the detector when the grating is present. More preferably, more than 25% is refocused onto the detector. The normalized tilt error-signal is derived from the position of the spot from the second light source on said four-quadrant detector. If A, B, C and D refer to the individual quadrants, the normalized radial-tilt error signal, called RTES, is given by :

$$R\,T\,E\,S = \frac{A + B - C - D}{A + B + C + D} \qquad\qquad (3)$$

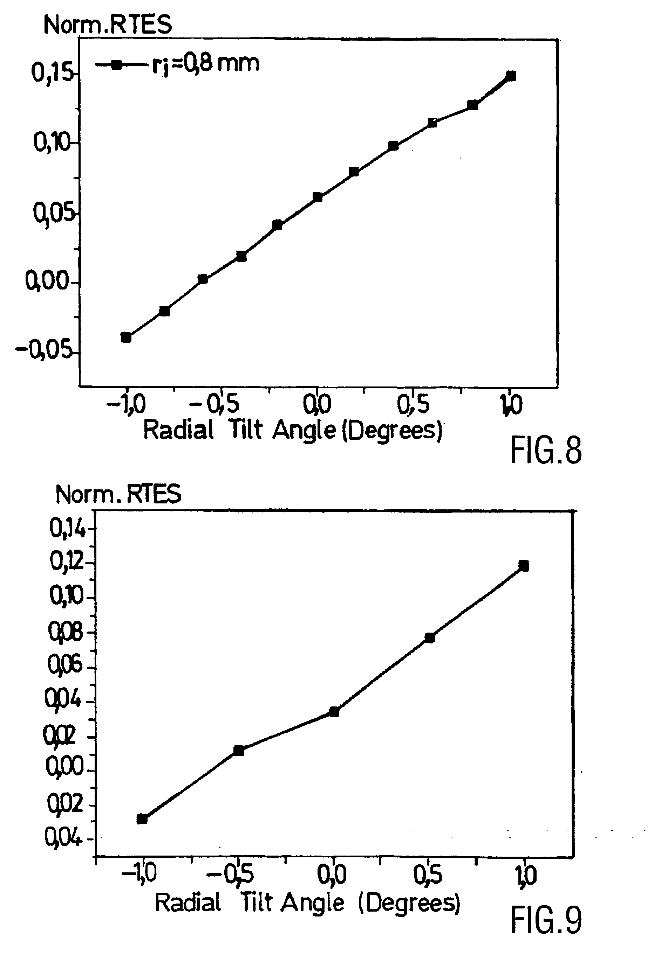

The simulated normalized radial-tilt error-signal obtained is shown in Fig.8.

In the second case, the diffractive structure may be attached to the objective lens. The radius and the corresponding pitch for each ring are then given in the following table 2, together with the numerical aperture (NA) belonging to the radius :

Table 2

| Ring number | Radius (mm) | Pitch($\mu$m) | NA |
|---|---|---|---|
| 1 | 1.360 | 0.0 | 0.49 |
| 2 | 1.624 | 264.0 | 0.59 |
| 3 | 1.799 | 175.0 | 0.65 |

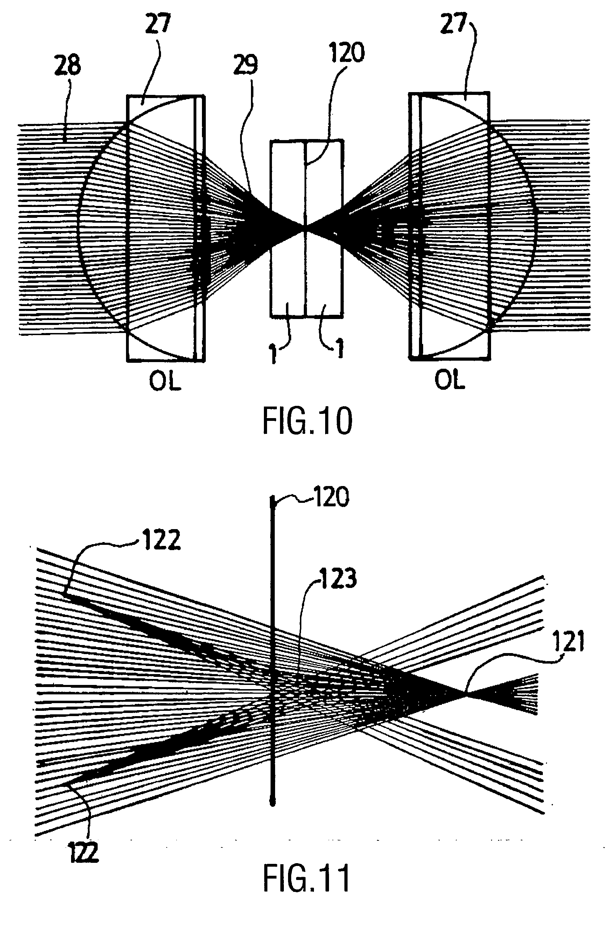

In order not to influence the returning light from the second light source when accessing a second disc having said second cover layer, the diffractive structure is confined to the region defined by 0.5 < NA < 0.65, where it acts as a weak positive lens for the light emitted by the second light source. Due to the lens effect, the rays are re-focused on the servo-detector (it may be noted that the diffractive structure has an overall aspheric shape in order to fit onto the aspheric surface of the objective lens). As described above, the grating structure may be approximated by a phase-step profile, so that the light from the first light source is not affected when passing through the region 0.5 < NA < 0.65. The nonnalised radial-tilt error-signal obtained with this modified objective lens is shown in Fig.9. The actual focus position of the edge rays (i.e. the part of the light from the second light source that falls in the region 0.5 < NA < 0.65 on its way to the disc) is important. This is shown in Figs 10 and 11, where Fig.10 shows the light from the second light source that passes through the objective lens (OL) 27 and is focused onto the information layer 120 of the disc 1 (note that Fig.10 shows an unfolded light path, i.e. the system is shown in transmission, while Fig.11 is a magnified view of the region around the information layer 120). As can be seen, the actual focus 121 is positioned "behind" the information layer 120. It is important that the diffractive structure brings the edge rays 122 to a focus 123 in front of this point and only slightly behind the information layer 120. Focusing the edge rays onto the information layer suppresses the beam landing as a consequence of disc tilt and hence does not lead to a useful error-signal.

It must be understood that the invention thus defined is not limited to the above-mentioned implementations. Whilst in the above described embodiment the first wavelength is smaller than the second wavelength, it is possible that the first wavelength may also be larger than the second wavelength. Also, whilst in the above-described embodiment, explicit reference is made to a detector with four quadrants, it appears that the principle can be applied to a detector having at least two or even six and more segments. Although the embodiment described above indicates a situation where the beam from the second light source used for the tilt measurement is confined to a numerical aperture which is smaller than the numerical aperture of the beam from the first light source, it is appreciated that a similar principle to the one given above can be applied to the opposite situation.

## Claims

1. An optical disc drive comprising rotating means (3), defining a rotating axis (4) for an optical disc, and optical scanning means (20), for scanning said optical disc (1) with a light beam, said optical scanning means themselves comprising at least :

   - a first light source (21), for producing said first light beam (22);
   - focusing means (27), applied to said light beam and provided between said first light source and a focusing point (30) on an information layer on said first disc (1) having a first cover layer ;
   - an optical detector (42) provided for receiving a first backward beam reflected from said information layer of said first disc ;
   - a second light source (51) for producing a second light beam also transmitted to said focusing means (27) and for measuring tilt from the position, on said optical detector (42), of a second spot corresponding to a second backward beam obtained after reflection of said second light beam on said information layer of said first disc (1); **characterized in that**, said optical disc drive further comprising, between said focusing point (30) and said optical detector (42) a diffractive structure (100) provided with diffracting elements (101) for substantially refocusing the returning second beam onto the detector (42).

2. An optical disc drive according to claim 1, in which said diffractive structure (100) is attached to one surface of a servo-lens (40) positioned just before said optical detector (42).

3. An optical disc drive according to claim 1, in which said diffractive structure (100) is attached to one surface of an objective lens (27) used as focusing means.

**4.** An optical disc drive according to claim 1, in which said diffractive structure (100) is attached to a separate plate.

**5.** An optical disc drive according to anyone of claims 2, 3 and 4, in which said diffractive structure (100) consists of a series of ring-shaped prisms (101).

**6.** An optical disc drive according to anyone of claims 2 and 3, in which the diffractive structure (100) is approximated by a step-wise structure (105-108).

**Patentansprüche**

**1.** Optisches Plattenlaufwerk, umfassend ein Drehmittel (3), das eine Drehachse (4) für eine optische Platte definiert, und ein optisches Abtastmittel (20), um die optische Platte (1) mit einem Lichtstrahl abzutasten, wobei das optische Abtastmittel selbst zumindest Folgendes umfasst:

- eine erste Lichtquelle (21), um den ersten Lichtstrahl (22) zu erzeugen;
- ein Fokussiermittel (27), das auf diesen Lichtstrahl angewendet wird und zwischen der ersten Lichtquelle und einem Fokussierpunkt (30) auf einer Informationsschicht der ersten Platte (1), die eine erste Abdeckschicht aufweist, bereitgestellt ist;
- einen optischen Feststeller (42), der bereitgestellt ist, um einen ersten rückwärts gerichteten Strahl, der von der Informationsschicht der ersten Platte zurückgestrahlt wird, zu empfangen;
- eine zweite Lichtquelle (51), um einen zweiten Lichtstrahl zu erzeugen, der ebenfalls zum Fokussiermittel (27) gesendet wird, und um aus der Position, auf dem optischen Feststeller (42), eines zweiten Flecks, der einem zweiten rückwärts gerichteten Strahl entspricht, welcher nach der Rückstrahlung des zweiten Lichtstrahls an der Informationsschicht der ersten Platte erhalten wird, die Neigung zu messen;

<u>dadurch gekennzeichnet,</u> **dass** das optische Plattenlaufwerk ferner zwischen dem Fokussierpunkt (30) und dem optischen Feststeller (42) einen beugenden Aufbau (100) umfasst, der mit beugenden Elementen (101) versehen ist, um den zurückkehrenden zweiten Strahl im Wesentlichen auf den Feststeller (42) zu refokussieren.

**2.** Optisches Plattenlaufwerk nach Anspruch 1, wobei der beugende Aufbau (100) an einer Oberfläche einer Servolinse (40) angebracht ist, die gerade vor dem optischen Feststeller (42) positioniert ist.

**3.** Optisches Plattenlaufwerk nach Anspruch 1, wobei der beugende Aufbau (100) an einer Oberfläche einer Objektivlinse (27) angebracht ist, die als Fokussiermittel verwendet wird.

**4.** Optisches Plattenlaufwerk nach Anspruch 1, wobei der beugende Aufbau (100) an einer gesonderten Platte angebracht ist.

**5.** Optisches Plattenlaufwerk nach einem der Ansprüche 2, 3 und 4, wobei der beugende Aufbau (100) aus einer Reihe von ringförmigen Prismen (101) besteht.

**6.** Optisches Plattenlaufwerk nach einem der Ansprüche 2 und 3, wobei dem beugenden Aufbau (100) durch einen stufenförmigen Aufbau (105 bis 108) nahegekommen wird.

**Revendications**

**1.** Unité d'entraînement de disque optique comprenant des moyens de rotation (3) qui définissent un axe de rotation (4) pour un disque optique et des moyens de balayage (20) pour balayer ledit disque optique (1) avec un faisceau lumineux, lesdits moyens de balayage optiques eux-mêmes comprenant au moins:

- une première source lumineuse (21) pour produire ledit premier faisceau lumineux (22);
- des moyens de focalisation (27) qui sont appliqués audit faisceau lumineux et qui sont prévus entre ladite première source lumineuse et un point de focalisation (30) sur une couche d'information sur ledit premier disque (1) ayant une première couche de recouvrement;
- un détecteur optique (42) qui est prévu de manière à recevoir un premier faisceau en arrière qui est réfléchi à partir de ladite couche d'information dudit premier disque;

- une deuxième source lumineuse (51) pour produire un deuxième faisceau lumineux qui est également transmis audits moyens de focalisation (27) et pour mesurer une inclinaison à partir de la position, sur ledit détecteur optique (42), d'un deuxième spot correspondant à un deuxième faisceau en arrière qui est obtenu après réflexion dudit deuxième faisceau lumineux sur ladite couche d'information dudit premier disque (1); **caractérisée en ce que** ladite unité d'entraînement de disque optique comprend encore, entre ledit point de focalisation (30) et ledit détecteur optique (42), une structure de diffraction (100) qui est pourvue d'éléments de diffraction (101) pour refocaliser sensiblement le deuxième faisceau retournant sur le détecteur (42).

2. Unité d'entraînement de disque optique selon la revendication 1, dans laquelle ladite structure de diffraction (100) est fixée à une surface d'une lentille d'asservissement (40) qui est positionnée justement devant ledit détecteur optique (42).

3. Unité d'entraînement de disque optique selon la revendication 1, dans laquelle ladite structure de diffraction (100) est fixée à une surface d'une lentille d'objectif (27) qui est utilisée en tant que moyens de focalisation.

4. Unité d'entraînement de disque optique selon la revendication 1, dans laquelle ladite structure de diffraction (100) est fixée à une plaque séparée.

5. Unité d'entraînement de disque optique selon l'une quelconque des revendications précédentes 2, 3 et 4, dans laquelle ladite structure de diffraction (100) est constituée d'une série de prismes annulaires (101).

6. Unité d'entraînement de disque optique selon l'une quelconque des revendications précédentes 2 et 3, dans laquelle la structure de diffraction (100) est calculée par approximation par une structure échelonnée.

FIG.1

DISC

FIG.2

FIG.3

FIG.4

FIG.5

FIG.6

FIG.7

FIG.8

FIG.9

FIG.10

FIG.11